**Europäisches Patentamt**

**European Patent Office**

**Office européen des brevets**

(11) Publication number: **0 119 661**
**B1**

(12) **EUROPEAN PATENT SPECIFICATION**

(45) Date of publication of patent specification: **18.07.90**

(21) Application number: **84200379.0**

(22) Date of filing: **15.03.84**

(51) Int. Cl.⁵: **B 01 D 53/34,** F 23 C 11/02, F 23 J 3/06

(54) **A method for water treating sulphur binding additives upon burning solid fuels.**

(30) Priority: **18.03.83 NL 8300988**

(43) Date of publication of application:
**26.09.84 Bulletin 84/39**

(45) Publication of the grant of the patent:
**18.07.90 Bulletin 90/29**

(84) Designated Contracting States:
**AT BE CH DE FR GB IT LI LU NL SE**

(56) References cited:
**GB-A-2 070 963**
**US-A-4 325 327**

(73) Proprietor: **Nederlandse Organisatie voor toegepast-natuurwetenschappelijk onderzoek TNO**
**Juliana van Stolberglaan 148**
**NL-2595 CL The Hague (NL)**

(72) Inventor: **Schmal, Dirk**
**van Ruysdaellaan 86**
**NL-2260 TM Leidschendam (NL)**
Inventor: **Van Gasselt, Max Leo Geert**
**Burg. R. Nepveulaan 8**
**NL-7313 EZ Apeldoorn (NL)**
Inventor: **Van Duin, Pieter Johannes**
**van Hardenbroekweg 16**
**NL-2202 EE Noordwijk (NL)**

(74) Representative: **van der Beek, George Frans, Ir. et al**
**Nederlandsch Octrooibureau Scheveningseweg 82 P.O. Box 29720**
**NL-2502 LS 's-Gravenhage (NL)**

Courier Press, Leamington Spa, England.

## Description

The invention relates to a method for water treating sulphur binding additives used in binding sulphur dioxide when burning solid (fossil) fuels e.g. in a fluidized bed.

Such a method is known from the German Offenlegungsschrift 27 35 436 the latter concerning the removal of sulphur dioxide formed upon combustion of fossil fuels from the flue gases by means of calcium carbonate or calcium magnesium carbonate introduced into the combustion zone during the combustion, whereby the sulphur dioxide is removed from the flue gases constituting combustion gases by being bound to the calcium oxide or calcium magnesium oxide, respectively, formed from the carbonate during the combustion; the calcium oxide or calcium magnesium oxide, respectively, being removed and slaked with water whereupon the calcium hydroxide or calcium magnesium hydroxide, respectively, thus formed is fed again into the combustion zone or into the gases emanating from the combustion zone.

By treating the calcium oxide or calcium magnesium oxide, respectively, with water, the oxide is converted into the hydroxide whereas the calcium sulphate present may bind 0.5 or 2 molecules of crystallization water, respectively, per 1 molecule of sulphate. In view of the relatively large molecular volumes of the substances formed, the absorption of water causes the particles to swell. Upon reheating the hydrated waste materials liberation of the combined water occurs, which results in a new pore structure of such a nature that yet considerable amounts of additional sulphur dioxide may be absorbed. Thus the limestone is reactivated by this treatment.

Shearer et al., in Hydration of spent limestone and dolomite to enhance sulfation in fluidized bed combustion, 15th Intersociety energy conversion engineering conference, Seattle, U.S.A., August 18, 1980, DE-81023124 Conf-800806-45 (1980) have suggested the treatment of waste materials with water in a separate fluidized bed.

This method has the drawback of requiring additional apparatus whereby the installation is rendered more complicated and an increase of costs is incurred.

This drawback applies also to another method disclosed by Dunne et al. in Agglomeration methods of improving FBC sorbent utilisation and combustion efficiency, 6th Int. Conf. on Fluidized Bed Combustion, Atlanta, U.S.A., April 9—11 (1980), page 1004, i.e. the agglomeration of waste materials with water.

The reason why the treatment employed in the above described methods is required is because of the decomposition of the calcium carbonate (and magnesium carbonate) present in the additive to form calcium oxide (and magnesium oxide) during the heating of the additive occurring in the combustion installation. The calcium oxide (burnt lime) thus formed is capable of absorbing sulphur dioxide. Oxygen derived from the combustion air causes calcium sulphate (anhydrite) to be formed thereby. Due to the relatively large molecular volume of calcium sulphate compared with that of calcium carbonate and calcium oxide this leads to an obturation of the pores formed upon decomposition of the calcium carbonate. Consequently only a limited proportion of the calcium oxide present is converted into calcium sulphate, in fact generally less than 30—35% like it has also been disclosed in German Offenlegungsschrift 27 35 436. Of course this limited conversion has a load increasing effect on the operation of the process because a considerably higher amount of limestone will be required than in case of a better conversion rate. Consequently the storage and conveying unit have to be adapted to these larger quantities.

Furthermore J.C. Montagna et al. in Regeneration of sulfated dolomite from a coal-fired FBC process by reductive decomposition of a calcium sulfate in a fluidized bed, Ind. Eng. Chem. Process Des. Dev. 16 (2), 1977, page 230, have suggested to regenerate the additives. According to this method the sulphur dioxide is recovered in a concentrate form by heat treating the waste materials which sulphur dioxide may then be converted by means of known processes into sulphur, sulphuric acid etc. Thereupon the additive may be reused. This regeneration, however, still causes problems while moreover the number of cycles of reuse and the like is limited and the process is rather sophisticated.

Furthermore it is known from the literature (vide for example J. Shearer et al. The mechanism of the salt additive effect on the $SO_2$ reactivity of limestone, 5th Int. Conf. on Fluidized Bed Comb. Washington D.C., 12 December 1977, M-78-68 (vol. 2) page 776) that a considerable improvement in binding sulphur dioxide is achieved by the addition of several percent of sodium chloride, calcium chloride and the like. In practice this method is not applied because in general these substances have a corrosion aggravating effect under the circumstances prevailing in the combustion installation.

British patent 2,070,963 discloses a hydro pressurized fluidized bed combustor in which water is supplied in the feed stock, which includes solids extracted from the flue gas from the combustor, resulting in a control of the temperature of the bed and generating steam bubbles fluidizing the bed.

The invention consists in a method for treating, with water, ash resulting from the combustion of solid fuel in the presence of the sulphur binding additive calcium oxide or calcium magnesium oxide or a compound forming such an oxide under the reaction conditions to react with the partially sulphated additive in the ash, which is to be recycled, characterized in that

(a) the partially sulphated additive to be treated is contacted at a temperature from 50°C to 300°C with fuel to be burnt thereby causing the water naturally present in the fuel to transfer, directly or via evaporation, to said additives present in the ash and to react therewith to form hydroxyde and/or hydrated sulphate of calcium or calcium and magnesium, resulting in reactivation of said additive and a decrease of the water content of the fuel, and (b) either no water, or, if the natural water content of the fuel is itself too low, no more than is required to ensure that the total amount of water available is sufficient to completely react with said additive is added to the fuel to be burnt.

This method is suitably carried out in a system used for conveying the solid (fossil) fuel from the storage to the combustion installation, whereby no additional apparatus will be required to perform the reactivation.

As the starting material one uses material derived from solid waste streams (ash) emanating from the installation; advantageously one will blend hot ash residues with the solid (fossil) fuel to be burnt. The treatment may be combined with a process for the extrusion of the solid fuel. A suitable treatment period is 1—10 minutes, although shorter or longer periods of time may be applied.

In order to achieve a good contact between the coal particles and the material to be treated the coal particles are appropriately of a diameter of at most 6 mm.

The method according to the invention may very well be combined with the well known operation of recirculation of ashes: the agglomeration (vide Dunne et al., Agglomeration methods of imparing FBC sorbent utilisation and combustion efficiency, 6th Int. Conf. on Fluidized Bed Combustion. Atlanta, U.S.A., April 9—11 (1980) page 1004).

A special advantage of the invention is that with most fuels no additional water has to be added and that the water by nature present in solid fuels is used. For coal this water content is 6—12%, usually 7—10 % by weight. It is of particular advantage that in performing the method according to the invention the existing apparatus may be used.

From Kirk-Othmer Encyclopedia of Chemical Technology, volume 4, page 91 it is known that the average moisture content of coal ranges from 3.8% for anthracite (stone coal) to 37.7% for lignite. Although this water content is already long known, nobody has ever suggested to use the water content of the coal instead of additional water for the regeneration.

It is of importance that calcium sulphate creates less problems than calcium oxide as a waste material: calcium oxide is a chemical waste material if present in an amount of more than 5% by weight. The amount of calcium oxide will however be reduced considerably by recirculating several times according to the method of the invention.

In recirculating the recirculation will be adjusted in practice such that in a continuous method the number of cycles is 2 to 3.

Upon combustion in a fluidized bed the residual sulphate content is relatively low and, dependent on the installation, amounts to 1.5—5% by weight. Moreover, the content is dependent on the location where the ash is withdrawn. Flue ashes, for instance, are usually removed by bag filters and the sulphur content of the ash in the cyclone and bag filters is usually 2—2.5% by weight. However part of the ash may be withdrawn from the fluidized bed and therein the sulphur content may rise to 5% by weight.

As regards the temperature applied, which should of course be below the decomposition temperature of calcium hydroxide, i.e. below 300—400°C. it is of importance that the water present in the fuel will evaporate sufficiently; this may be achieved by a higher temperature as well as by a longer heating time. In the present practice a temperature of 50—300°C, in particular 70—120°C is applied.

Advantageously the method according to the invention may be combined with a method for the extrusion of solid fuel (coal) described in the Dutch Patent Application 82.01824. Other systems for conveying may likewise be employed. Pneumatic systems and screw conveyors are examples thereof.

In the method according to the invention the solid fuel (coal) and part of the waste materials are introduced together in the conveying system. This introduction into the conveying system does, however, not have to occur at the same location. Preferably, though not necessarily the treatment is performed above the boiling temperature of water whereby a good contact between the water and the waste materials is warranted.

The method according to the invention is suited for all solid fuels provided they contain a sufficient amount of water. In case the amount of water present is not sufficient additional water has to be added to enable the reaction of the partially sulphated additive to be completed. Usually however solid fuel contains a sufficient amount of water.

It is not required to achieve an intimate admixture of the fuel with the additives to be treated. A sufficient transport of water may occur in the vapour phase.

Apart from the decrease of the water requirements compared with that of other processes in which the reactivation is performed differently (with additional water) there is also attained a better heat generation efficiency because of the lower amount of limestone required. The lower amount of limestone required results in an efficiency improvement of about 0.5%.

In the first sulphation step of limestone (Carmeuse Engis particle size of 1—1.2 mm) a method according to the invention achieves a conversion of about 10% by weight and after the treatment with water in a second sulphation step again 30—40% by weight may be converted so that 50% by weight may be achieved at a maximum. Upon following treatments a lower increase in products to be converted is achieved. Similar results were obtained when using another type of limestone (Dumont-Wautier).

The invention will be elucidated with reference to some drawings.

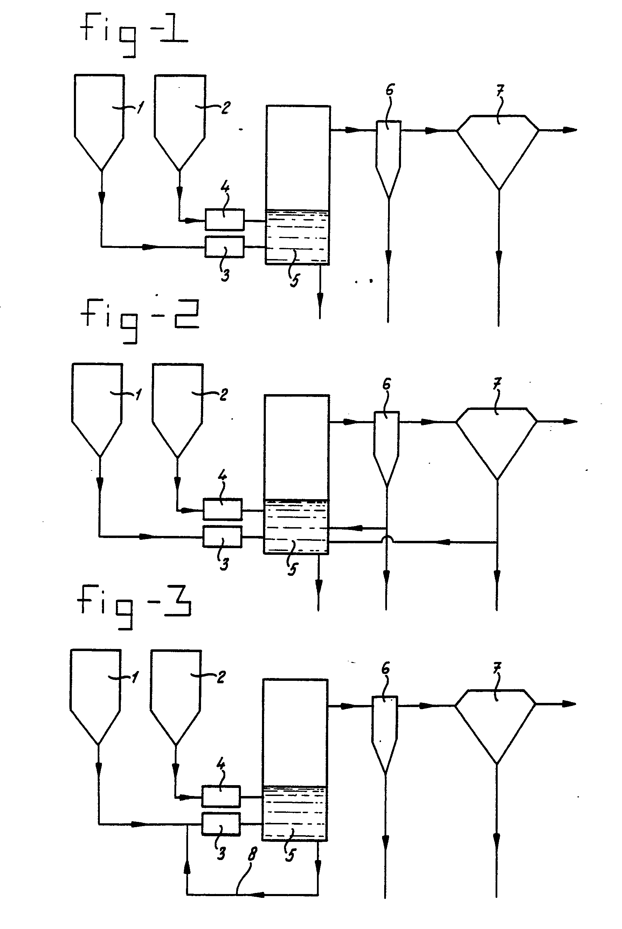

The Figures 1 and 2 represent schematically the manner in which a fluidized bed installation is operated at present.

The Figures 3 to 5, inclusive, illustrate schematically the manner in which a fluidized bed installation may be operated in accordance with the invention. As shown in Figure 1 the solid fuel and the additive are introduced from bins 1 and 2 into the fluidized bed 5 by means of screw conveyors or other conveying systems 3 and 4. In some cases the conveying systems 3 and 4 may be combined. The flue gases loaded with fine particles formed upon combustion are purified by means of cyclones 6 and/or filters 7. Waste materials (ash materials) are withdrawn from the fluidized bed 5, the cyclones 6 and/or the filters 7.

An improvement of the combustion efficiency and the binding of sulphur and consequently a decrease of the amount of waste materials is achieved by the method shown in Fig. 2. In this case the ash materials derived from the cyclones and/or filters are returned to the fluidized bed 5.

Fig. 3 indicates in which manner the ash material from the bed may be returned in accordance with the present invention. By way of a conveyor duct 8 provided to that effect the ash is introduced into the conveying system 3 also serving for the conveyance of the fuel. In this conveyor system reactivation of the partially sulphated additive occurs by means of the water derived from the coal (optionally after heating up).

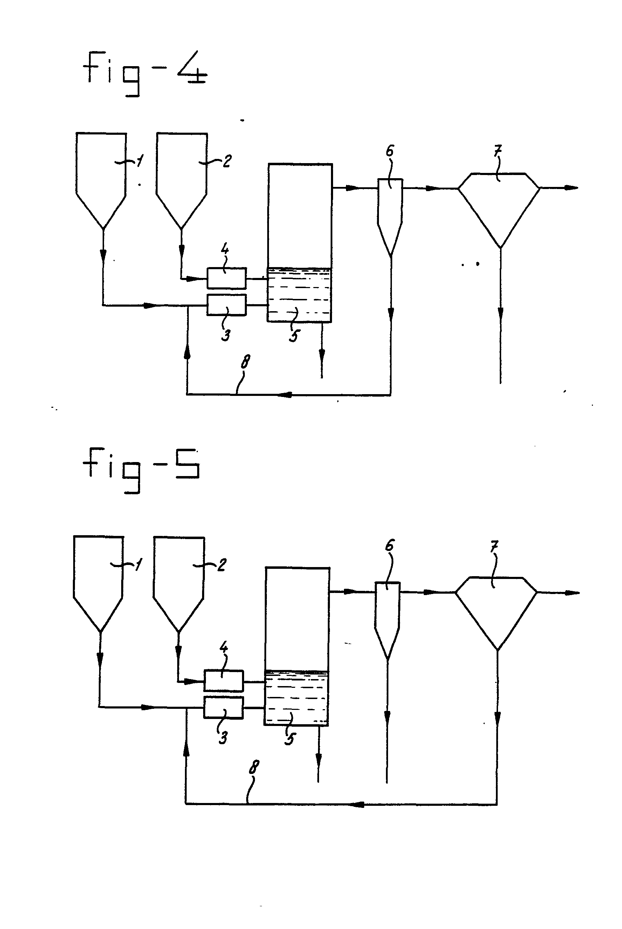

The method in Figure 4 differs from that in Fig. 3 because in Fig. 4 the ash material from the cyclone is recirculated and reactivated.

The method in Fig. 5 differs from that in Fig. 3 because according to Fig. 5 the ash material from the filter is recirculated and reactivated.

The invention is not restricted to the method schematically represented in Figures 3—5 inclusive. All possible combinations of the methods mentioned are within the scope of the invention.

Moreover the invention is not restricted to the combustion in a fluidized bed of solid fuels. The invention also applies to other combustion processes (like powder coal combustion for instance) in which sulphur binding additives are used.

The invention is further elucidated though not restricted by the following examples.

Example 1.

A study was made of the reactivitability of a cyclone ash sample obtained from TNO's 4MW fluidized bed combustion installation. Without any particular treatment 0.1 g of $SO_2$ was bound per 1 g of (dry) cyclone ash (apart from the sulphur dioxide absorption already occurring in the installation). This was determined in a synthetic flue gas containing 0.3% of ash.

A similar starting sample was then kept in an autoclave at a temperature of about 300°C and a pressure of about $25 \times 10^5$ Pa (25 bar) for 2 hours. 0.1 ml of water was added per 1 g of cyclone ash.

This water was not contacted with the ash. After terminating the treatment the sulphur dioxide absorption was determined (in the same manner like above). It was found that 0.15 g of $SO_2$ was now bound per 1 g of the cyclone ash.

The fluidized bed combustion installation was operated thereby at a conversion of 526 kg/h of a Polish coal containing 0.86% of sulphur together with 41 kg/h of limestone (Carmeuse Engis). The calcium sulphur molecular ratio thereby was 3.

Example 2.

A similar starting sample like in example 1 was introduced into an autoclave and kept at a temperature of 300°C and a pressure of about $25 \times 10^5$ Pa (25 bar). There was added 1.2 g of Polish coal having a moisture content of 7.5% by weight instead of the water. No blending of the ash and the coal was performed. After terminating the treatment the sulphur dioxide absorption of this sample was determined likewise. It was found that 0.19 g of $SO_2$ were now bound per 1 g of cyclone ash. In this case the amount of $SO_2$ bound was almost twice the amount bound without treatment (vide example 1).

Example 3.

A second cyclone ash sample (derived from another test with the 4MW installation obtained at a calcium sulphur ratio of 1, coal in an amount of 518 kg/h and limestone in an amount of 14 kg/h) was tested also as regards its reactivitability. Without any treatment 0.02 g of $SO_2$ were absorbed therein per 1 g of cyclone ash (apart from the sulphur dioxide absorption occurring in the installation). A similar starting sample was kept in an autoclave at 200°C and a pressure of about $15 \times 10^5$ Pa (15 bar) for 2 hours. 0.5 g of coal (moisture content of 7.5% by weight) was added per 1 g of cyclone ash. No blending of the ashes and the coal was performed. After terminating the treatment the sulphur dioxide absorption of this sample was also determined. It was found that 0.03 g of $SO_2$ were now bound by 1 g of cyclone ash, this being about one and a half times as much than without a pretreatment.

**Claims**

1. A method for treating, with water, ash resulting from the combustion of solid fuel in the presence of the sulphur binding additive calcium oxide or calcium magnesium oxide, or a compound forming such an oxide under the reaction conditions, to react with the partially sulphated additive in the ash, which is to be recycled, characterized in that (a) the partially sulphated additive to be treated is contacted at a temperature from 50 °C to 300 °C with fuel to be burnt thereby causing the water naturally present in the fuel to transfer, directly or via evaporation, to said additives present in the ash and to react therewith to form hydroxyde and/or hydrated sulphate of calcium or calcium and magnesium, resulting in reactivation of said additive and a decrease of the water content of the fuel, and (b) either no water, or, if the natural water content of the fuel is itself too low, no more than is required to ensure that the total amount of water available is sufficient to completely react with said additive is added to the fuel to be burnt.

2. The method of claim 1, characterized in that the treatment is carried out in a system used for conveying the fuel from the storage to the combustion installation.

3. The method of claim 1 or 2, characterized in that hot ash residues are blended with fuel to be burned.

4. The method of claims 1—3, characterized in that the treatment is combined with a process of extruding the fuel.

5. The method of claims 1—4, characterized in that the treatment is carried out for a period of time of from 5 to 10 minutes.

6. The method of claims 1—5, characterized in that coal particles of a diameter of at most 6 mm are used.

**Patentansprüche**

1. Verfahren zur Wasserbehandlung von Asche, die von der Verbrennung von festem Brennstoff in Gegenwart des schwefelbindenden Additivs Calciumoxid oder Calciummagnesiumoxid oder einer Verbindung, die unter den Reaktionsbedingungen ein solches Oxid bildet, herrührt, um mit dem partiell sulfatiertem Additiv in der Asche zu reagieren, welches recycelt werden soll, dadurch gekennzeichnet, dass (a) das zu behandelnde partiell sulfatierte Additiv bei einer Temperatur von 50°C bis 300°C mit zu verbrennendem Brennstoff in Kontakt gebracht wird, wodurch das natürlich im Brennstoff enthaltene Wasser direkt oder durch Verdampfung in die in der Asche anwesenden Additive überführt wird, um mit ihnen unter Bildung von Hydroxid und/oder hydratisiertem Sulfat von Calcium oder Calcium und Magnesium zu reagieren, was zu einer Reaktivierung des Additivs und einer Abnahme des Wassergehaltes des Brennstoffs führt, und (b) entweder kein Wassser oder, wenn der natürliche Wassergehalt des Brennstoffs selbst zu niedrig ist, nicht mehr als notwendig ist, um sicherzustellen, dass die Gesamtmenge an verfügbarem Wasser ausreicht, um mit dem Additiv vollständig zu reagieren, dem zu verbrennenden Brennstoff zugesetzt wird.

2. Verfahren nach Anspruch 1, dadurch gekennzeichnet, dass die Behandlung in einem System ausgeführt wird, das für die Überführung des Brennstoffs von der Lagerung in die Verbrennungsanlage benutzt wird.

3. Verfahren nach Anspruch 1 oder 2, dadurch gekennzeichnet, dass heisse Ascherückstände mit dem zu verbrennenden Brennstoff vermischt werden.

4. Verfahren nach Anspruch 1 bis 3, dadurch gekennzeichnet, dass die Behandlung mit einem Verfahren des Extrudierens des Brennstoffs kombiniert wird.

5. Verfahren nach Anspruch 1 bis 4, dadurch gekennzeichnet, dass die Behandlung für eine Zeitdauer von 5 bis 10 Minuten ausgeführt wird.

6. Verfahren nach Anspruch 1 bis 5, dadurch gekennzeichnet, dass Kohleteilchen von einem Durchmesser von höchstens 6 mm verwendet werden.

**Revendications**

1. Procédé pour traiter avec de l'eau la cendre résultant de la combustion d'un combustible solide en présence d'un additif pouvant lier le soufre, fait d'oxyde de calcium ou d'oxyde de calcium et de magnésium, ou d'un composé formant un tel oxyde dans les conditions de réaction, pour qu'elle réagisse avec l'additif partiellement sulfaté dans la cendre, qui doit être recyclé, caractérisé en ce que (a) l'additif partiellement sulfaté à traiter est mis en contact, à une température de 50°C à 300°C, avec un combustible à brûler pour que l'eau, naturellement présente dans le combustible, soit transférée directement ou par évaporation audit additif présent dans la cendre et réagisse avec lui pour former de l'hydroxyde et/ou du sulfate hydraté de calcium ou de calcium et de magnésium pour réactiver ledit additif et diminuer la teneur en eau du combustible et (b) soit on n'ajoute pas d'eau au combustible à brûler, soit, si la teneur naturelle en eau du combustible est en soi trop faible, on ne lui ajoute pas plus d'eau qu'il n'en faut pour que la quantité totale d'eau disponible suffise pour assurer la réaction complète avec ledit additif.

2. Procédé selon la revendication 1, caractérisé en ce que le traitement est effectué dans un système utilisé pour transporter le combustible du stockage à l'installation de combustion.

3. Procédé selon la revendication 1 ou 2, caractérisé en ce que des résidus de cendre chaude sont mélangés au combustible à brûler.

4. Procédé selon les revendications 1 à 3, caractérisé en ce que le traitement est combiné à un procédé d'extrusion du combustible.

5. Procédé selon les revendications 1 à 4, caractérisé en ce que le traitement est effectué pendant une période de 5 à 10 minutes.

6. Procédé selon les revendications 1 à 5, caractérisé en ce qu'on utilise des particules de charbon ayant un diamètre maximal de 6 mm.

EP 0 119 661 B1

fig-1

fig-2

fig-3

1

## fig-4

## fig-5